# EUROPEAN PATENT APPLICATION

(11) **EP 2 863 660 A1**
(43) Date of publication of application: **22.04.2015**
(21) Application number: 13819624.1
(22) Date of filing: 31.05.2013
(51) Int. Cl.: H04W 4/12

(54) **STRANGER CALL WARNING METHOD AND DEVICE AND INTELLIGENT MOBILE TERMINAL**

(30) Priority: 17.07.2012 CN 201210246769
(71) Applicant: ZTE Corporation, Shenzhen, Guangdong 518057 (CN)
(72) Inventor: SHEN, Sujiao, Shenzhen Guangdong 518057 (CN); LI, Li, Shenzhen Guangdong 518057 (CN)
(74) Representative: Vossius & Partner Patentanwälte Rechtsanwälte mbB
(86) International application number: PCT/CN2013/076579
(87) International publication number: WO 2014/012398

(57) **Abstract**

Provided are a method, device and smart phone for alerting against an unknown incoming call, and the method includes: a phone number of an incoming call is extracted; the phone number is searched for through a predefined search engine; and a page found is displayed on a display of a mobile terminal. The present disclosure can prompt a user to reject a crank call.

## Description

### TECHNICAL FIELD

The present disclosure relates to information identification techniques in mobile communications, and in particular to a method, device and smart mobile terminal for alerting against an unknown incoming call.

### BACKGROUD

With the popularization of mobile terminals, more and more lawbreakers try to perform telecommunication frauds through calling other users' mobile terminals, for example performing frauds by telling a user through a phone call that he/she draws a prizewinning ticket in a lottery and needs to get it, and the means of telecommunication frauds are everchanging, which makes it difficult for users to prevent from being cheated.

In addition, incoming calls for promoting insurance and products annoy users of mobile terminals, to avoid being disturbed some users may reject all unknown incoming calls; but doing so may miss unknown incoming calls deserved to be answered such as that made by an expressman asking a user to take a commodity.

At present, some smart mobile terminal has functions of indicating attribution of a phone number of an incoming call, but this is not sufficient for a user to determine whether the incoming call is made by a fraud or salesman.

### SUMMARY

In view of the above, the present disclosure provides a method, device and smart mobile terminal for alerting against an unknown incoming call, capable of prompting a user to reject a crank call.

The technical solutions of the present disclosure are implemented as follows.

Embodiments of the present disclosure provide a method for alerting against an unknown incoming call, and the method includes:
a phone number of an incoming call is extracted;
the phone number is searched for through a predefined search engine; and
a page found is displayed on a display of a mobile terminal.

In an embodiment, before the searching for the phone number through a predefined search engine, the method may further include:
it is determined whether the phone number is stored in a contact list of the mobile terminal, it is determined whether the phone number is stored in a predefined blacklist when the phone number is not stored in the contact list, and when the phone number is not stored in the blacklist, an operation of searching for the phone number through the predefined search engine is implemented.

In an embodiment, after the displaying a page found on a display of a mobile terminal the method may further include:
it is determined whether a predefined keyword is included in the page found, and a warning is issued when the predefined keyword is included.

In an embodiment, after the issuing a warning the method may further include:
a phone number corresponding to the warning is stored in the predefined blacklist.

Embodiments of the present disclosure provides a device for alerting against an unknown incoming call, and the device includes an extraction unit, a searching unit and a display unit, wherein
the extraction unit is configured to extract a phone number of an incoming call;
the searching unit is configured to search for a phone number extracted by the extraction unit through a predefined search engine; and
the display unit is configured to display a page found by the searching unit on a display of a mobile terminal.

In an embodiment, the device may further include a contact list determination unit configured to determine whether the phone number is stored in a contact list of the mobile terminal, and notify a warning unit to implement an operation of searching for the phone number through the predefined search engine when the phone number is not stored in the contact list.

In an embodiment, the device may further include a blacklist determination unit configured to determine whether the phone number is stored in a predefined blacklist, and notify the warning unit to implement the operation of searching for the phone number through the predefined search engine when the phone number is not stored in the blacklist.

In an embodiment, the device may further include the warning unit configured to determine whether a predefined keyword is included in the page found by the searching unit, and issue an warning when the keyword is included.

In an embodiment, the device may further include a storage unit configured to store a phone number corresponding to a warning issued by the warning unit in the predefined blacklist.

Embodiments of the present disclosure provide a smart mobile terminal including above device for alerting against an unknown incoming call.

By means of a technical solution of embodiments of the present disclosure, a phone number of an incoming call is extracted; the phone number is searched for through a predefined search engine; and a page found is displayed on a display of a mobile terminal. In this way, a user can determine based on information found whether an unknown incoming call is a crank call so that he/she may reject the crack call to avoid being disturbed.

### BRIEF DESCRIPTION OF THE DRAWINGS

Fig. 1 is a flow chart of a method for alerting against an unknown incoming call provided by an embodiment of the present disclosure;
Fig. 2 is a schematic structural diagram of a device for alerting against an unknown incoming call provided by an embodiment of the present disclosure; and

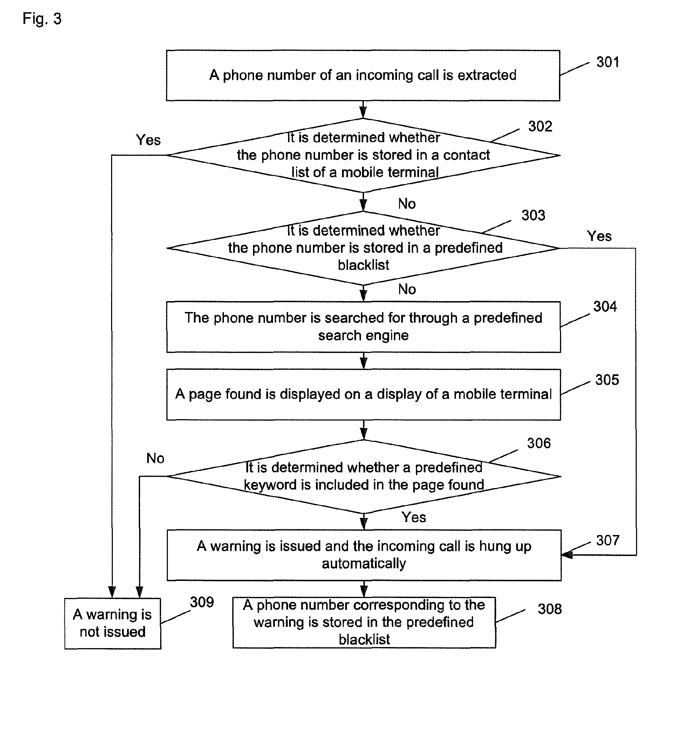

Fig. 3 is a flow chart of a method for alerting against an unknown incoming call provided by an embodiment of the present disclosure.

### DETAILED DESCRIPTION

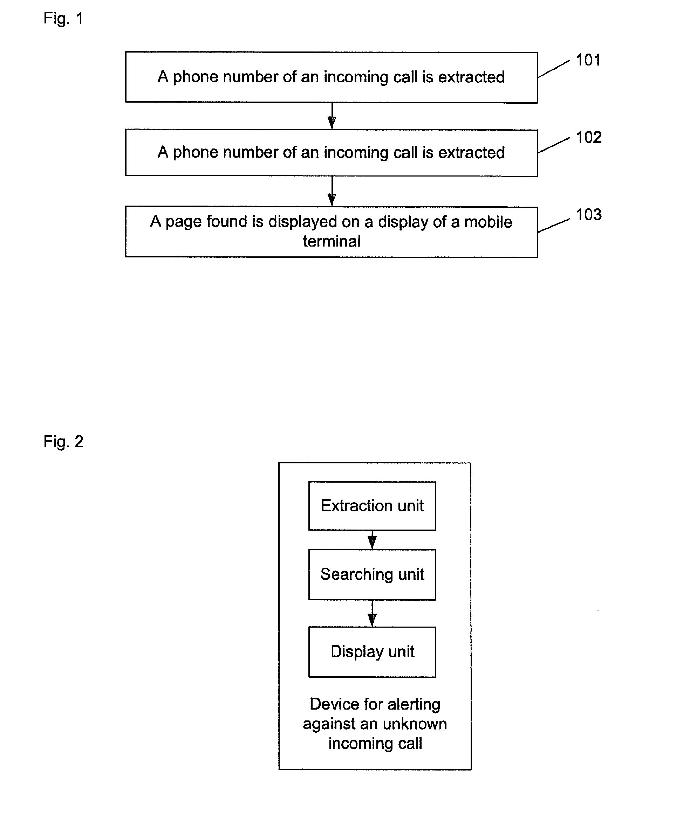

Fig. 1 is a flow chart of a method for alerting against an unknown incoming call provided by an embodiment of the present disclosure, as shown in Fig. 1, the method includes:

Step 101, a phone number of an incoming call is extracted;

Step 102, the phone number is searched for through a predefined search engine;

The search engine may be configured in advance by a user, for example, configured as search engines such as baidu, google and the like.

Step 103, a page found is displayed on a display of a mobile terminal.

Optionally, before step 102 the method may further include:
it is determined whether the phone number is stored in a contact list of the mobile terminal, and an operation of searching for the phone number through the predefined search engine is implemented when the phone number is not stored in the contact list.

Optionally, before step 102 the method may further include:
it is determined whether the phone number is stored in a predefined blacklist, and the operation of searching for the phone number through the predefined search engine is implemented when the phone number is not stored in the predefined blacklist.

Optionally, after step 102 the method may further include:
it is determined whether a predefined keyword is included in the page found, and a warning is issued when the predefined keyword is included.

Optionally, the warning includes one or more of a text reminder, an voice reminder, a vibration reminder or an alarm reminder.

Optionally, after the issuing a warning the method may further include:
a phone number corresponding to the warning is stored in the predefined blacklist.

A structure of a device for alerting against an unknown incoming call provided by an embodiment of the present disclosure is as shown in Fig. 2 and the device includes an extraction unit, a searching unit and a display unit, wherein
the extraction unit is configured to extract a phone number of an incoming call;
the searching unit is configured to search for a phone number extracted by the extraction unit through a predefined search engine; and
the display unit is configured to display a page found by the searching unit on a display of a mobile terminal.

Optionally, the device may further include a contact list determination unit configured to determine whether the phone number is stored in a contact list of the mobile terminal, and notify a warning unit to implement an operation of searching for the phone number through the predefined search engine when the phone number is not stored in the contact list.

Optionally, the device may further include a blacklist determination unit configured to determine whether the phone number is stored in a predefined blacklist, and notify the warning unit to implement the operation of searching for the phone number through the predefined search engine when the phone number is not stored in the blacklist.

Optionally, the device may further include the warning unit configured to determine whether a predefined keyword is included in the page found by the searching unit, and issue an warning when the keyword is included.

Optionally, the device may further include a storage unit configured to store a phone number corresponding to a warning issued by the warning unit in the predefined blacklist.

A smart mobile terminal provided by an embodiment of the present disclosure includes above device for alerting against an unknown incoming call.

A flow chart of a method for alerting against an unknown incoming call provided by an embodiment of the present disclosure is as shown in Fig. 1, and the method includes:

Step 301, a phone number of an incoming call is extracted;
specifically, when there is an incoming call a phone number of the incoming call is extracted

Step 302, it is determined whether the phone number is stored in a contact list of a mobile terminal, when the phone number is not stored in the contact list, proceed to step 303; when the phone number is stored in the contact list, proceed to step 309.

Step 303, it is determined whether the phone number is stored in a predefined blacklist, when the phone number is not stored in the blacklist, proceed to step 304; when the phone number is stored in the blacklist, proceed to step 307.

Here the blacklist is used to stored phone numbers of known crank calls.

Step 304, the phone number is searched for through a predefined search engine;
specifically, start a browser, open a predefined search engine and input the phone number into an input box of the search engine to perform searching.

The search engine may be configured in advance by a user, for example, configured as search engines such as baidu, google and the like.

Step 305, a page found is displayed on a display of a mobile terminal.

In this way, a user may determine whether the phone number corresponds to a crank call based on information found such as fraud complaint information, attribution information of phone numbers and the like.

Here the page found may be displayed translucently on the display of the mobile terminal so that operations of answering/rejecting an incoming call are not influenced by a page displayed. Specifically, the page found is arranged on above a calling interface and the color of texts on the page is configured to be different from that of the calling interface, for example the calling interface having a lighter color, so that the page found is displayed translucently on the display of the mobile terminal.

Step 306, it is determined whether a predefined keyword is included in the page found, when the predefined keyword is included, proceed to step 307; when the predefined keyword is not included, proceed to step 309;
here whether the predefined keyword is included in the page found is determined by searching for the predefined keyword in the page found.

The keyword may be several keywords initially configured by the system, such as telecommunications frauds, duty drawback for car purchasing, arrear of the phone and the like, and may also be configured by a user, for example through adding a keyword of "insurance".

Step 307, a warning is issued and the incoming call is hung up automatically.

Here the warning may include one or more of a text reminder, an voice reminder, a vibration reminder or an alarm reminder.

Step 308, a phone number corresponding to the warning is stored in the predefined blacklist, and the process ends.

Step 309, a warning is not issued, and the process ends.

What described are merely preferable embodiments of the present disclosure, and are not intended to limit the present disclosure.

### INDUSTRIAL APPLICABILITY

By means of the method, device and smart phone for alerting against an unknown incoming call provided by the present disclosure, a phone number of an incoming call is extracted; the phone number is searched for through a predefined search engine; and a page found is displayed on a display of a mobile terminal. In this way, a user can determine based on information found whether an unknown incoming call is a crank call so that he/she may reject the crack call to avoid being disturbed.

## Claims

1. A method for alerting against an unknown incoming call, comprising:
extracting a phone number of an incoming call;
searching for the phone number through a predefined search engine; and
displaying a page found on a display of a mobile terminal.

2. The method according to claim 1, before the step of searching for the phone number through a predefined search engine, the method further comprising:
determining whether the phone number is stored in a contact list of the mobile terminal, determining whether the phone number is stored in a predefined blacklist when the phone number is not stored in the contact list, and when the phone number is not stored in the blacklist, implementing an operation of searching for the phone number through the predefined search engine.

3. The method according to claim 1, after the step of the displaying a page found on a display of a mobile terminal, the method further comprising:
determining whether a predefined keyword is included in the page found, and issuing a warning when the predefined keyword is included.

4. The method according to claim 3, after the step of issuing a warning, the method further comprising:
storing a phone number corresponding to the warning in the predefined blacklist.

5. A device for alerting against an unknown incoming call, comprising an extraction unit, a searching unit and a display unit, wherein
the extraction unit is configured to extract a phone number of an incoming call;
the searching unit is configured to search for a phone number extracted by the extraction unit through a predefined search engine; and
the display unit is configured to display a page found by the searching unit on a display of a mobile terminal.

6. The device according to claim 5, further comprising a contact list determination unit configured to determine whether the phone number is stored in a contact list of the mobile terminal, and notify a warning unit to implement an operation of searching for the phone number through the predefined search engine when the phone number is not stored in the contact list.

7. The device according to claim 5, further comprising a blacklist determination unit configured to determine whether the phone number is stored in a predefined blacklist, and notify the warning unit to implement the operation of searching for the phone number through the predefined search engine when the phone number is not stored in the blacklist.

8. The device according to claim 5, further comprising the warning unit configured to determine whether a predefined keyword is included in the page found by the searching unit, and issue an warning when the keyword is included.

9. The device according to claim 8, further comprising a storage unit configured to store a phone number corresponding to a warning issued by the warning unit in the predefined blacklist.

10. A smart mobile terminal comprising the device for alerting against an unknown incoming call according to any one of claims 7 to 9.
